Europäisches Patentamt

European Patent Office

Office européen des brevets

(19)

(11) Numéro de publication: **0 191 695 B1**

(12) **FASCICULE DE BREVET EUROPEEN**

(45) Date de publication du fascicule du brevet:
**22.06.88**

(51) Int. Cl.⁴: **C 10 G 11/18, B 01 J 8/18**

(21) Numéro de dépôt: **86400253.0**

(22) Date de dépôt: **06.02.86**

(54) **Procédé et dispositif d'injection de catalyseur dans un procédé de craquage catalytique à l'état fluide, notamment de charges lourdes.**

(30) Priorité: **07.02.85 FR 8501703**

(43) Date de publication de la demande:
**20.08.86 Bulletin 86/34**

(45) Mention de la délivrance du brevet:
**22.06.88 Bulletin 88/25**

(84) Etats contractants désignés:
**BE CH DE FR GB IT LI LU NL**

(56) Documents cités:
**EP - A - 0 027 398**
**US - A - 4 197 189**
**US - A - 4 332 674**
**US - A - 4 414 101**
**US - A - 4 479 870**

(73) Titulaire: **COMPAGNIE DE RAFFINAGE ET DE DISTRIBUTION TOTAL FRANCE: Société Anonyme dite, 5, rue Michel Ange, F-75016 Paris (FR)**

(72) Inventeur: **Mauléon, Jean-Louis, 22, Avenue de l'Abreuvoir, F-78160 Marly-le-Roi (FR)**
Inventeur: **Sigaud, Jean-Bernard, 18, Boulevard de la République, F-92420 Vaucresson (FR)**
Inventeur: **Demar, Michel, 28, Promenade Mona Lisa, F-78000 Versailles (FR)**

(74) Mandataire: **Jolly, Jean-Pierre et al, Cabinet BROT et JOLLY 83, rue d'Amsterdam, F-75008 Paris (FR)**

ACTORUM AG

## Description

La présente invention concerne le craquage catalytique à l'état fluide de charges d'hydrocarbures. Elle a plus particulièrement pour objet de nouveaux procédés et dispositifs d'injection du catalyseur et de la charge à craquer dans la zone réactionnelle. Elle concerne également l'utilisation d'un tel dispositif d'injection en vue du craquage catalytique d'une charge lourde.

On sait que l'industrie pétrolière utilise de façon usuelle des procédés de craquage, dans lesquels des molécules d'hydrocarbures à haut poids moléculaire et à point d'ébullition élevé sont scindés en molécules plus petites, qui peuvent, bouillir dans des domaines de températures plus faibles, convenant à l'usage recherché.

Le procédé le plus couramment employé dans ce but, à l'heure actuelle, est le procédé dit de craquage catalytique à l'état fluide (en anglais, Fluid Catalytic Cracking, ou encore procédé FCC). Dans ce type de procédé, la charge d'hydrocarbures est vaporisée et mise en contact à haute température avec un catalyseur de craquage, qui est maintenu en suspension dans les vapeurs de la charge. Après que l'on ait atteint par craquage la gamme de poids moléculaires désirée, avec un abaissement correspondant des points d'ébullition, le catalyseur est séparé des produits obtenus, strippé, régénéré par combustion du coke formé, puis remis en contact avec la charge à craquer.

Dans les procédés de ce type, l'abaissement souhaité des points d'ébullition résulte de réactions catalytiques et thermiques contrôlées, le procédé FCC étant naturellement mis en œuvre de façon à ce que l'unité de craquage soit en équilibre thermique. Autrement dit, l'alimentation en catalyseur chaud régénéré doit être telle qu'elle puisse répondre aux diverses exigences thermiques de la section réactionelle, à savoir, en particulier:

– le préchauffage de la charge liquide;
– la vaporisation de cette charge;
– l'apport de calories exigé par les réactions impliquées, lesquelles, globalement, sont endothermiques.

Les développements les plus récents en matière de craquage catalytique ont ainsi montré que l'un des paramètres les plus importants de la réaction de craquage était lié à la rapidité et à l'uniformité de la mise en contact de la charge avec les grains de catalyseur, ainsi qu'à la qualité de l'atomisation et de la vaporisation de cette charge, lors de l'injection dans la zone réactionnelle, souvent appelée élévateur, ou «riser».

En effet, les charges à craquer sont habituellement injectées dans la zone réactionnelle à une température généralement comprise entre 80 et 400 °C, sous une pression relative de 0,7 à 3,5 bar (1 bar = $10^5$ Pa), tandis que la température du catalyseur régénéré qui arrive dans cette zone peut être de l'ordre de 600 à 950 °C.

En particulier, lorsque l'on procède au craquage de charges composées d'hydrocarbures à haut point d'ébullition, contenant notamment des asphaltènes, le catalyseur est injecté dans la zone réactionnelle à des températures qui peuvent monter jusqu'à 950 °C. Une partie de la quantité de chaleur ainsi apportée permet, dans un premier temps, le craquage thermique instantané des molécules les plus lourdes en molécules plus légères. L'ensemble des molécules de la charge et des grains de catalyseur ayant alors atteint une température d'équilibre, la réaction de craquage catalytique s'effectue par contact de ces molécules avec les sites actifs du catalyseur.

Les nombreuses études effectuées par la Demanderesse, en vue d'améliorer le transfert thermique entre les grains de catalyseur et la charge à traiter, ont cependant mis en évidence:

– que les rendements obtenus effectivement avec les unités de craquage les plus performantes utilisées jusqu'à présent demeuraient cependant inférieurs à ceux que laissaient prévoir les études théoriques, et

– que cette différence était due en particulier à une maîtrise insuffisante du rapport réel «C/O» entre la quantité de catalyseur C injectée dans la zone réactionnelle et celle 0 de la charge à traiter.

La présente invention vise donc à proposer un procédé et un dispositif d'injection de catalyseur, qui, grâce à une fluidisation améliorée des grains de catalyseur dans la zone réactionnelle, avant l'injection de la charge, assurent une meilleure uniformité et un meilleur contrôle de ce rapport C/O.

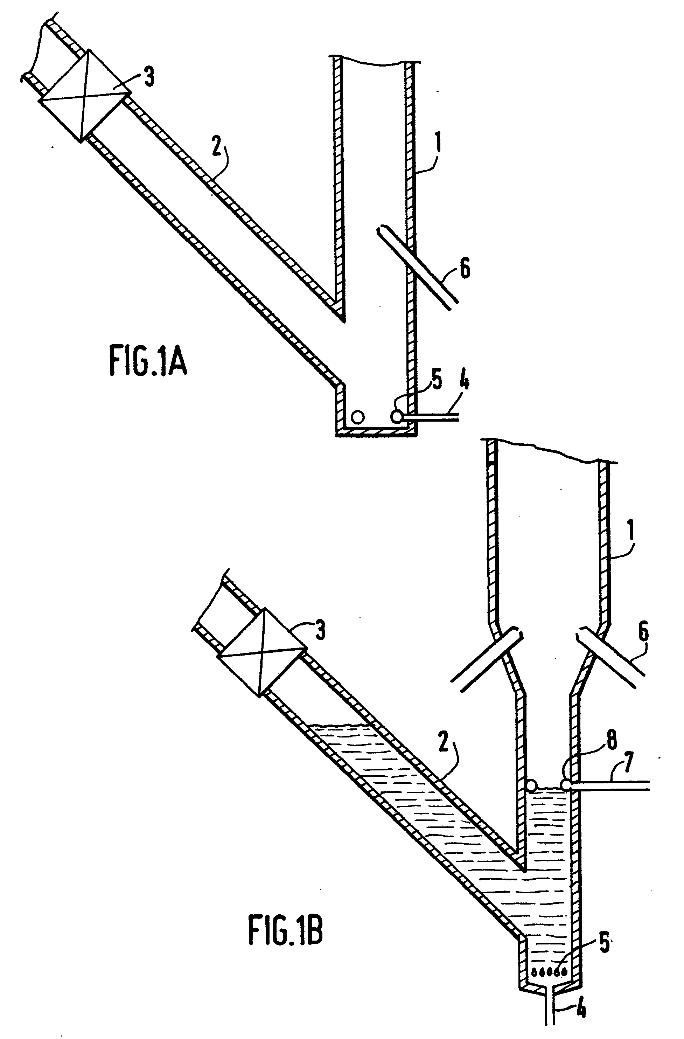

Pour plus de clarté, on rappellera ci-après, en référence à la figure 1A des dessins annexés, la structure des dispositifs usuels d'injection de catalyseurs au réacteur ou «riser». Sur ces dessins:

La figure 1A représente schématiquement un dispositif classique d'injection de catalyseur, dans un procédé de craquage catalytique à lit fluidisé;

La figure 1B est un schéma analogue d'un dispositif où l'injection s'effectue conformément à l'invention;

La figure 2 est un schéma d'un dispositif de craquage catalytique, équipé d'un système d'injection de fluide conforme à l'invention, avec une enceinte de régénération du catalyseur à un seul étage;

La figure 3 représente un autre dispositif de craquage catalytique, équipé d'un système d'injection conforme à l'invention, avec une enceinte de régénération du catalyseur à deux étages.

Sur les différentes figures, les organes similaires sont désignés par les mêmes chiffres de référence.

Dans les dispositifs classiques d'injection de catalyseur au réacteur ou «riser», tels que celui représenté sur la figure 1A, on voit que la catalyseur régénéré est introduit à la base de l'élévateur de charge 1 du type «riser» par une ligne 2, en une quantité déterminée par l'ouverture ou la fermeture d'une vanne 3. Les grains de catalyseur sont alors projetés vers le haut du riser par injection, à la base de ce dernier, d'un fluide gazeux en provenance de la ligne 4; cette injection est faite à l'aide d'un distributeur de fluide ou «diffuseur» 5.

La charge à craquer est introduite à un niveau supérieur par la ligne 6 et vaporisée à l'aide d'un dispositif approprié dans le flux dense de grains de catalyseur.

Les travaux effectués par la Demanderesse ont permis de mettre en évidence le fait que les écarts relevés entre les rendements théoriques et ceux réellement observés pouvaient être imputables à des irrégularités du flux de catalyseur engendrés par ce type de dispositif d'injection du catalyseur.

En effet, dans ce type de dispositif d'injection, lors du passage en phase diluée du flux de grains de catalyseur, des agrégats de grains de catalyseur peuvent se former, et les grains de catalyseur ont tendance à arriver «par paquets» dans la ligne 2 d'introduction au riser. Le flux gazeux qui entre par la ligne 4 étant constant, le flux dilué de grains de catalyseur projeté dans l'élévateur ou «riser» oscille alors dans des proportions notables autour d'une densité moyenne. Aussi, lorsque la charge pulvérisée entre en contact avec un flux trop dense de catalyseur, il se produit un apport de chaleur trop élevé, ce qui se traduit par une cokéfaction importante du catalyseur, lequel devient alors inactif. Inversement, lorsque la charge pulvérisée entre en contact avec un flux de catalyseur insuffisamment dense, le transfert de chaleur désiré n'est pas réalisé et les réactions de craquage souhaitées n'ont pas lieu.

La présente invention propose de remédier à ces inconvénients en homogénéisant le flux de catalyseur injecté dans le réacteur de craquage par une fluidisation en deux étapes à la base de l'élévateur ou «riser».

L'invention a par conséquent pour objet un procédé d'injection et de conditionnement de grains de catalyseur régénéré à la base d'un réacteur-élévateur de craquage catalytique, au-dessous de la zone d'injection de la charge à craquer, caractérisé en ce que l'on injecte à faible débit dans le réacteur un premier fluide au-dessous du niveau d'introduction des grains de catalyseur en provenance de la régénération, en vue de maintenir un lit fluidisé dense et homogène de catalyseur, dont la partie supérieure sera située au-dessus de ladite zone d'introduction du catalyseur, et en ce que l'on injecte à débit plus élevé un second fluide en-dessous de ladite partie supérieure du lit dense de catalyseur, mais substantiellement au-dessus de la zone d'arrivée des grains de catalyseur en provenance de la régénération, en vue de réaliser une phase fluidisée diluée, homogène et à débit constant de grains de catalyseur au-dessus de la zone d'injection dudit second fluide gazeux, mais au-dessous de la zone d'injection de la charge.

L'invention a également pour objet un dispositif d'injection et de conditionnement des grains de catalyseur régénéré à la base d'un réacteur-élévateur de craquage catalytique, du type dit «riser», disposé verticalement, situé en dessous de la zone d'injection de la charge à craquer et caractérisé en ce qu'il comprend, d'une part, en dessous du niveau d'introduction des grains de catalyseur en provenance de la régénération, un premier diffuseur d'un premier fluide gazeux fonctionnant à faible débit, de façon à maintenir un lit fluidisé dense et homogène de catalyseur, dont la partie supérieure sera située au-dessus de ladite zone d'introduction du catalyseur, et, d'autre part, en dessous de la partie supérieure du lit dense de catalyseur ainsi constitué, mais substantiellement au-dessus de la zone d'arrivée des grains de catalyseur en provenance de la régénération, un second diffuseur d'un second fluide gazeux fonctionnant à débit plus élevé et destiné à la réalisation d'une phase fluidisée diluée et homogène de grains de catalyseur au-dessus dudit second diffuseur, mais en dessous de la zone d'injection de la charge.

Une forme de réalisation d'un tel dispositif d'injection peut être représentée sur la figure 1B des dessins annexés. Dans ce dispositif, le catalyseur régénéré est introduit à la base du riser 1 par une ligne 2, en quantité déterminée par l'ouverture ou la fermeture de la vanne 3. Il est alors maintenu à la base du riser en lit fluidisé dense par injection, à l'aide d'un premier diffuseur 5, d'un premier fluide arrivant par la ligne 4. Le catalyseur ainsi remis et maintenu en phase fluidisée dense et homogène est ensuite projeté, de façon également homogène, dans la zone réactionnelle par une nouvelle injection d'un second fluide arrivant par la ligne 7, à l'aide d'un second diffuseur 8 situé dans le riser et placé à la partie supérieure du lit dense de catalyseur.

La charge à craquer est alors introduite par la ligne 6 et vaporisée par un dispositif approprié dans le flux dilué et homogène de grains de catalyseur, permettant ainsi de maintenir de façon précise et constante le rapport C/O à une valeur appropriée, en fonction de la nature de la charge à traiter et de la température d'arrivée de ce catalyseur.

Il va de soi que le dispositif représenté sur la figure 1B ne limite nullement la forme du ou des dispositifs, objet de la présente invention.

En effet, la zone fluidisée dense de catalyseur, constituée par la ligne 2 d'introduction du catalyseur et par la base du riser, peut être modifiée de façon connue en soi et en particulier peut avoir la forme d'un U, le long duquel le fluide gazeux pourra être introduit à l'aide de plusieurs lignes d'injection tenant lieu de diffuseur.

Un premier avantage du dispositif selon la présente invention découle du fait que le maintien d'un lit fluidisé dense de catalyseur à la base du riser, préalablement à la formation d'une phase fluidisée diluée, permet d'obtenir une plus grande homogénéité de la densité du catalyseur et de la température de ce dernier, avant le contact avec la charge à craquer. Les risques de collision entre les gouttelettes de la charge et les grains de catalyseur sont donc diminués et il se dépose moins de coke à la surface des grains, qui gardent donc leur activité en vue de la réaction ultérieure de craquage. Le taux de conversion de l'unité et la sélectivité sont donc améliorés. En outre, la température des grains de catalyseur qui entrent dans la zone réactionnelle étant rendue homogène par le présence du lit fluidisé dense de catalyseur, les problèmes liés aux pertes de températures du catalyseur, lors du passage de ce dernier de la zone de régénération vers la zone réactionnelle par la ligne 2, se trouvent réduits et les coûts d'isolation thermique de ladite ligne 2 peuvent être diminués.

En outre, l'homogénéisation des grains de catalyseurs, ainsi réalisée à la base de la zone réactionnelle, permet d'utiliser cette zone pour l'introduction d'un certain nombre d'additifs destinés à améliorer la réaction de craquage: parmi des additifs, on peut citer les passivateurs de vanadium, de nickel ou les passivateurs de sites acides des zéolithes, qui sont bien connus de l'homme de l'art et qui peuvent être ajoutés dans la zone dense de catalyseur en quantité pouvant varier entre 0 et 50 ppm (par rapport à la charge).

Le deuxième avantage de ce dispositif est de permettre une bonne mise en présence d'un flux homogène des grains de catalyseur avec une charge finement atomisée, ce qui en permet une vaporisation instantanée. Il se produit donc un transfert thermique quasi instantané et la réaction de craquage commence aussitôt à la température requise. Toutes les molécules de la charge sont donc sujettes à une réaction catalytique, qui a lieu essentiellement à la même sévérité. Les réactions de thermo-craquage étant ainsi réduites, il est possible d'opérer à des températures plus élevées et d'obtenir un taux de conversion meilleur, ainsi qu'un meilleur indice d'octane de l'essence produite. Il est donc également possible de diminuer substantiellement la durée du temps de séjour de la charge dans la zone réactionnelle, c'est-à-dire de diminuer la longueur du riser. Cette diminution a pour conséquences:

– d'une part, d'abaisser la perte de charge du riser et de permettre ainsi un dimensionnement plus compact de l'unité,

– d'autre part, de réduire le rôle nocif des métaux lourds contenus dans la charge; ceux-ci, disposant de moins de temps pour être réduits, sont ainsi partiellement passivés.

Un troisième avantage du dispositif selon l'invention réside dans le fait que la composition du fluide entrant par la ligne 7, puis par le second diffuseur 8, peut être différente de celle du fluide entrant par le premier diffuseur 5. Ce deuxième diffuseur 8 étant placé à une distance relativement faible de la zone d'injection de la charge, le fluide gazeux est susceptible de contenir une proportion notable de vapeur d'eau, qui, en présence du catalyseur très chaud, formera de l'hydrogène sans endommager le catalyseur; il y aura alors augmentation de la production d'essences et de gazoles au cours de la réaction de craquage.

Un autre avantage du dispositif selon l'invention découle du fait qu'il est possible, grâce à ce dispositif, d'envoyer dans l'unité de craquage catalytique des charges contenant des quantités beaucoup plus grandes de produits lourds et, en particulier, d'asphaltènes: la mise en présence d'un flux homogène de grains de catalyseur très chaud avec la charge d'huiles lourdes finement atomisée et vaporisée permet de réaliser une réaction de craquage thermique instantanée des molécules les plus lourdes en molécules plus petites, sans cokéfaction excessive des grains de catalyseur. Ceux-ci, ayant ainsi maintenu leur activité, permettront aux réactions de craquage catalytique des molécules plus petites ainsi formées de se produire dans le riser. Le taux de conversion de l'unité de craquage sera donc notablement amélioré, et les quantités à recycler seront diminuées.

Un autre avantage du dispositif selon l'invention résulte du fait que la diminution de la quantité de coke formé, lors de la mise en contact de la charge et du catalyseur, facilite la régénération de ce catalyseur en réduisant le temps de séjour dans le ou les régénérateurs et en y diminuant les possibilités d'apparition de points chauds, qui sont à la fois nuisibles pour le catalyseur et pour l'unité.

Selon une caractéristique particulière du dispositif d'injection selon la présente invention, le premier distributeur de fluide ou diffuseur 5 de fluide est situé à la partie inférieure de la zone réactionnelle, au-dessous du niveau de l'arrivée des grains de catalyseur régénérés issus de la ligne 2. Ce diffuseur est réalisé suivant des techniques bien connues de l'homme de l'art. Il peut posséder une grande variété de configurations et disposer d'un nombre d'orifices très variable. Il doit être cependant conçu pour éviter l'occurrence de «renardages» ou d'effets de piston ou «pistonnages» dans le lit fluidisé dense qu'il engendre, tout en limitant la perte de charge. Il doit en outre bien résister à la corrosion, à l'abrasion et aux variations brusques de température.

Le fluide gazeux utilisé pour obtenir le lit fluidisé dense de catalyseur à la base de la zone réactionnelle peut être avantageusement constitué par des hydrocarbures possédant cinq ou moins de cinq atomes de carbone ou des mélanges de ceux-ci. Il peut, en outre, contenir éventuellement jusqu'à environ 15% en volume d'hydrogène et jusqu'à environ 10% en volume de vapeur d'eau.

Les conditions d'injection de ce fluide gazeux varient, bien entendu, en fonction de la taille et du poids des grains des catalyseurs utilisés. D'une façon générale, la formation du lit dense homogène au-dessus du premier diffuseur sera réalisée en limitant la vitesse de passage du fluide gazeux entre 0,01 m/s et 0,5 m/s et, plus particulièrement, entre 0,03 et 0,3 m/s, permettant ainsi d'obtenir une densité du lit fluidisé généralement comprise entre 400 g/cm$^3$ et 800 g/cm$^3$.

La hauteur du lit fluidisé dense obtenu à la base de la zone réactionnelle, selon la présente invention, doit être suffisamment grande pour permettre l'homogénéisation d'une quantité relativement importante des grains de catalyseur. Cette hauteur sera toutefois calculée pour éviter l'apparition de «pistonnage» dans le lit dense. Dans la pratique, la surface du lit fluidisé dense sera nécessairement située au-dessus du second diffuseur 8, qui devra lui-même être placé suffisamment au-dessus du niveau d'entrée du catalyseur régénéré arrivant par la ligne 2, de façon à ce que la densité des grains situés près de la surface du lit fluidisé dense ne soit pas perturbée par l'arrivée des grains régénérés.

Le deuxième diffuseur 8 du dispositif d'injection selon la présente invention sera donc nécessairement situé dans le réacteur ou riser au-dessus de la zone d'arrivée du catalyseur par la ligne 2 et, dans la pratique, il sera situé à une distance de la partie supérieure de l'arrivée de cette ligne 2 pouvant être comprise entre 1 et 5 fois le diamètre de l'élévateur au niveau du deuxième diffuseur.

Afin d'éviter l'érosion de ce diffuseur et l'attrition des grains de catalyseur envoyés dans le riser, le second diffuseur sera avantageusement disposé en forme d'anneau tubulaire, dont la partie supérieure sera percée de multiples orifices destinés à laisser échapper le fluide vers la partie supérieure du réacteur.

Un certain nombre de variantes dans la forme de ce deuxième diffuseur sont, bien sûr, à la portée de l'homme de l'art et entrent donc dans le champ de la présente invention, en particulier, l'arrivée du fluide gazeux pourra être réalisée en remplaçant l'anneau tubulaire ci-dessus mentionné par des orifices latéraux, éventuellement en forme de fentes, situés directement à la périphérie du riser. En outre, le deuxième diffuseur pourra également prendre la forme d'un ou de plusieurs tubes éventuellement coudés dont les orifices seront placés vers le haut à la partie centrale du riser. Enfin, pour accentuer à la fois le mélange du fluide gazeux et des grains de catalyseurs et une accélération efficace de la phase fluidisée diluée, il est possible de modifier la forme du riser au voisinage de l'arrivée du fluide gazeux pour obtenir un effet de venturi.

Le fluide gazeux utilisé pour obtenir le lit fluidisé dilué, mais homogène, dans la zone située au-dessus de second diffuseur sera avantageusement constitué du même type de fluide gazeux que celui utilisé au premier diffuseur. Cependant, et comme il a été mentionné plus haut, il est possible de modifier la composition du fluide gazeux sortant de second diffuseur, en y adjoignant en particulier des quantités notables de vapeur d'eau, susceptible de former au contact de certains catalyseurs une partie de l'hydrogène nécessaire au réarrangement des molécules craquées. Ce fluide pourra en outre avantageusement contenir tout ou partie de gaz relativement riches en hydrogène ou en composés hydrogénés, en provenance d'autres secteurs de la raffinerie.

Enfin, le fluide pourra avantageusement être constitué, pour tout ou partie, de liquides facilement vaporisables et possédant par exemple des points d'ébullition inférieurs à 250 °C: la vaporisation quasi instantanée de tels liquides permet d'une part l'expansion volumétrique nécessaire à l'accélération souhaitée des grains de catalyseur, et d'autre part la régulation de la température d'injection du catalyseur, et d'autre part la régulation de la température d'injection du catalyseur dans la zone réactionnelle à l'aide d'une variation de la quantité du liquide dans le fluide.

En particulier, on pourra utiliser comme liquide facilement vaporisable des essences de sources diverses qui, lorsque la température de régénération du catalyseur sera suffisante, pourra en sus des effets précédemment mentionnés, craquer lesdites essences et donc contribuer à la production d'oléfines légères.

Ainsi, par exemple, on a observé que l'injection par la ligne 7 d'un recycle de naphta léger permettait, à conversion égale, de doubler la production d'oléfines légères en $C_2$, $C_3$ et $C_4$.

La vitesse superficielle en aval du deuxième diffuseur sera notablement plus élevée que celle pratiquée à la base de la zone réactionnelle, de façon à permettre la réalisation d'une phase fluidisée diluée de grains de catalyseur. Cette vitesse de passage sera avantageusement supérieure à 0,3 m/s, le plus souvent comprise entre 1,0 et 10 m/s.

Enfin, l'injecteur 6 sera placé dans le riser à une distance relativement faible au-dessus du second diffuseur 8. Cette distance devra néanmoins être suffisante pour éviter les turbulences généralement observées dans la zone située immédiatement au-dessus de la surface d'un lit fluidisé dense des grains de catalyseur. Dans la pratique, cette distance entre l'injecteur et le second diffuseur sera au moins égale à celle du diamètre de l'élévateur et sera le plus souvent comprise entre une et cinq fois ce diamètre.

L'injection en 6 de la charge à craquer dans la zone réactionnelle 1 sera également réalisée suivant les techniques bien connues de l'homme de l'art pour pulvériser en très fines gouttelettes une charge d'hydrocarbures. Afin d'assurer une répartition homogène des gouttelettes, on utilisera de préférence plusieurs dispositifs d'injection par pulvérisation, qui seront répartis de façon symétrique autour du riser. Des dispositifs tels que celui décrit dans le document FR-A-2 561 539 (EP-A-0 157 691), au nom de la Demanderesse, pourront en particulier être utilisés à cet effet.

Les catalyseurs utilisables dans les dispositifs objet de la présente invention comprennent les catalyseurs de craquage du type alumino-silicates cristallins, certains types de silice-alumine, de silice-magnésie, de silice-zirconium, tous ayant des activités de craquage relativement élevées, ou possédant de telles activités. Les alumino-silicates cristallins peuvent se trouver à l'état naturel ou être préparés par synthèse, selon des techniques bien connues de l'homme de l'art. Ils peuvent être choisis parmi les zéolithes de synthèse ou les argiles, telles que la faujasite, certaines mordenites, la montmorillonite, les argiles pontées, les alumino-phosphates, ou similaires.

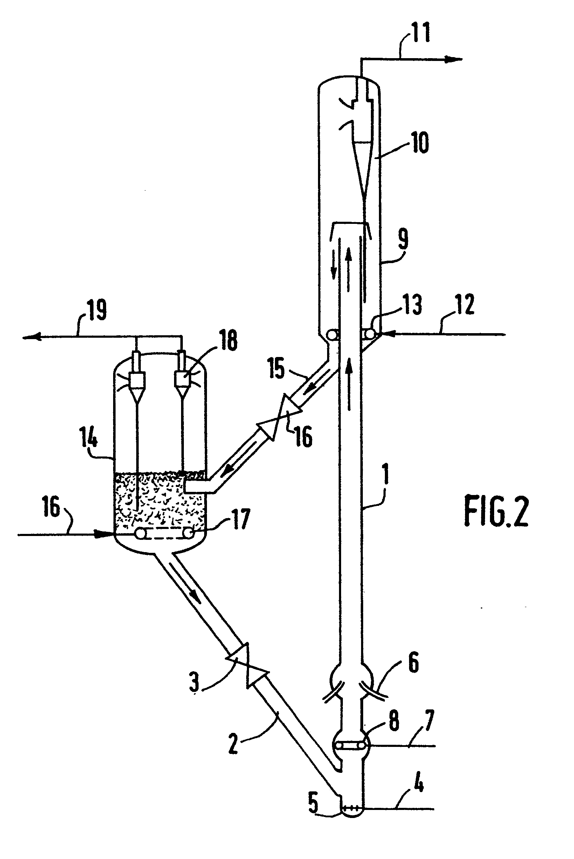

Le dispositif de craquage par le procédé FCC selon l'invention et représenté sur la figure 2 est d'un type connu en soi. Il comprend essentiellement une colonne 1, dite élévateur de charge, ou riser, alimentée à sa base par la ligne 2 en grains de catalyseur régénéré, en quantité déterminée par l'ouverture ou la fermeture d'une vanne 3. La température et la densité des grains de ce catalyseur régénéré sont rendues homogènes par injection à la base du riser, à l'aide d'un premier diffuseur 5, d'un premier fluide gazeux arrivant par la ligne 4. Le catalyseur ainsi remis et maintenu en phase fluidisée dense et homogène est alors projeté de façon homogène dans le riser par une nouvelle injection à l'aide d'un second diffuseur 8, situé dans le riser au-dessus de la ligne d'arrivée du catalyseur régénéré, d'un second fluide gazeux identique ou non au précédent, arrivant par la ligne 7. La charge à craquer est alors introduite dans le riser à l'aide d'un injecteur 6.

La colonne 1 débouche à son sommet dans une enceinte 9, qui lui est par exemple concentrique et dans laquelle s'effectuent, d'une part, la séparation de la charge craquée et, d'autre part, le strippage du catalyseur usé. La charge traitée est séparée dans un système cyclonique 10, qui est logé dans l'enceinte 9, au sommet de laquelle est prévue une ligne d'évacuation 11 de la charge craquée, tandis que les particules de catalyseur usé sont réinjectées à la base de l'enceinte 9. Une ligne 12 alimente en gaz de strippage, généralement de la vapeur d'eau, des injecteurs 13, disposés régulièrement à la base de l'enceinte 9.

Les particules de catalyseur usé ainsi strippées sont évacuées à la base de l'enceinte 9 vers un régénérateur 14, par l'intermédiaire d'un conduit 15, sur lequel est prévue une vanne de régulation 16. Dans le régénérateur 14, le coke déposé sur les particules du catalyseur est brûlé à l'aide d'air, injecté à la base du régénérateur par une ligne 16, qui alimente des injecteurs 17 régulièrement espacés. Les particules du catalyseur traité et le gaz de combustion sont séparés par des cyclones 18, d'où le gaz de combustion est évacué par une ligne 19, tandis que les grains de catalyseur régénéré sont rejetés vers la base du régénérateur, d'où elles sont recyclées par le conduit 2, équipé d'une vanne de régulation 3, à l'alimentation de l'élévateur ou riser.

Les caractéristiques dimensionnelles et opératoires d'un tel dispositif sont habituellement les suivantes:

- hauteur de l'élévateur 1: 5 à 40 mètres,
- température de la charge à craquer: 75 à 450 °C,
- débit d'alimentation de l'élévateur 1 en charge à traiter: 1000 à 10 000 tonnes par jour,
- débit d'alimentation de l'élévateur 1 en catalyseur: 3 à 50 tonnes par minute,
- temps de séjour de la charge dans l'élévateur 1: 0,05 à 10 secondes,
- température de régénération du catalyseur: 650 à 900 °C,
- temps de séjour du catalyseur dans le régénérateur 9: 5 à 20 mn.

Les charges d'hydrocarbures susceptibles d'être injectées dans les unités du type représenté sur la figure 2, contiennent, d'une façon générale, des hydrocarbures ayant des gammes d'ébullition se situant entre 200 et 550 °C ou plus, et leur densité peut varier entre 10 et 35° API.

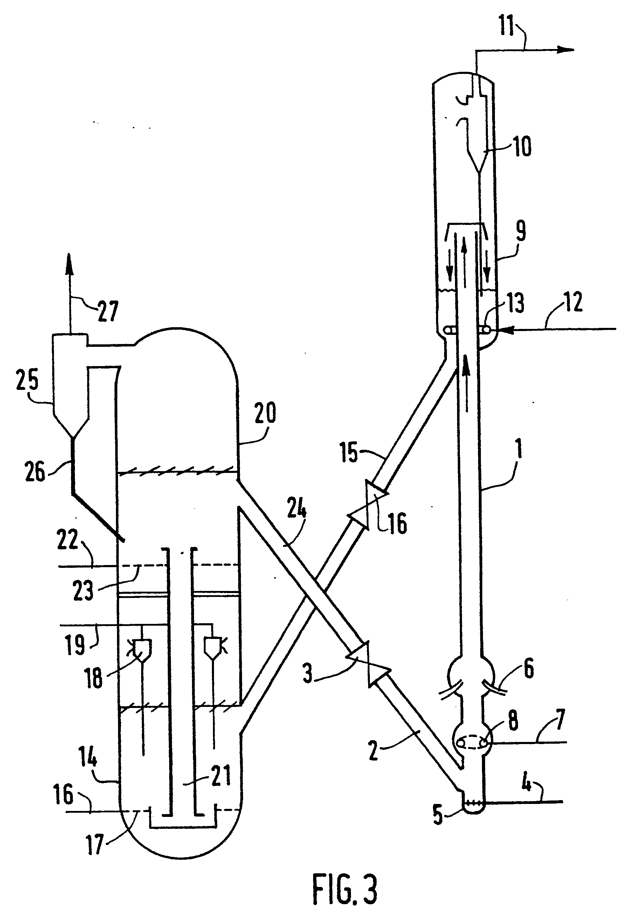

La figure 3 représente un autre ensemble de craquage catalytique équipé du système d'injection conforme à l'invention, dans lequel on utilise une enceinte de régénération à deux étages.

Sur cette figure, les organes déjà décrits en relation avec les figures 1 et 2 sont désignés par les mêmes chiffres de références. Le régénérateur y est à flux ascendant et comporte deux étages 14 et 20.

Le catalyseur usé ayant déjà subi un strippage dans l'enceinte 9 est acheminé par la conduite 15 à l'étage inférieur 14 du régénérateur.

La base de ce premier étage de combustion est alimentée en air par la ligne 16 et l'air est distribué par des injecteurs régulièrement espacés 17. Dans cet étages, des cyclones 18 séparent le gaz de combustion évacué par la ligne 19 des particules de catalyseur partiellement régénéré.

Les particules du catalyseur ayant subi un premier traitement partiel de régénération sont ensuite transférées au second étage 20 du régénérateur par le conduit central 21.

La base de l'étage 20 est également alimentée en air par la ligne 22 et les injecteurs 23. Les particules du catalyseur régénéré sont évacuées latéralement vers une enceinte tampon 24 et sont recyclées par le conduit 2 à l'alimentation de l'élévateur. Les gaz de combustion évacués à la partie supérieure de l'étage 20 sont traités dans un système cyclonique externe 25, qui est par conséquent susceptible de résister parfaitement aux températures élevées qui résultent d'une combustion complète du coke et à la base duquel les particules du catalyseur sont retournées par le conduit 26 à l'étage 20, tandis que les gaz de combustion sont évacués par la ligne 27.

Cet ensemble de craquage catalytique équipé d'un régénérateur à deux étages à flux ascendant, et d'un dispositif d'injection conforme à l'invention, présente les avantages suivants:

- double régénération du catalyseur, permettant une combustion intégrale du coke sans altération des propriétés catalytiques,
- pas de limitation de la température du second régénérateur, ce qui permet au catalyseur d'acquérir la température requise pour vaporiser la charge, surtout lorsque cette dernière est une charge lourde,
- amélioration de la stabilité thermique et de la résistance du catalyseur aux métaux.

Ces charges lourdes d'hydrocarbures susceptibles d'être injectées dans les unités de craquage du type représenté sur la figure 3 peuvent contenir des hydrocarbures dont le point d'ébullition peut aller jusqu'à 750 °C et plus, et dont la densité peut varier entre 10 et 35° API.

L'exemple qui suit vise à illustrer la présente invention, et n'a donc par conséquent aucun caractère limitatif.

## EXEMPLE

Deux essais de craquage catalytique ont été réalisés à partir d'une même charge d'hydrocarbures dans une unité à deux régénérateurs du type de celle décrite à la figure 3. Contrairement au premier essai, dans lequel un dispositif classique d'injection des grains de catalyseur et de charge à craquer a été utilisé, le deuxième essai a été réalisé à l'aide d'un dispositif selon l'invention permettant d'injecter la charge à craquer dans un lit fluidisé dilué et homogène de grains de catalyseur.

Nature de la charge traitée:
- densité:     22,8° API,
- soufre:     0,9% en poids,

- azote total:     0,3% en poids,
- vanadium:     9 ppm,
- nickel:     4 ppm,
- carbone Conradson:     4,6% en poids
- non distillable à 560 °C: 26% en volume.

Au cours de ces deux essais, les conditions opératoires ont été les suivantes:

| | 1er essai avec injection de type classique | 2ème essai avec injection selon l'invention |
|---|---|---|
| Temp. d'injection du catalyseur (°C): | 771 | 757 |
| Temp. d'injection de la charge (°C): | 210 | 255 |
| Temp. du riser (°C): | 527 | 527 |
| Type de catalyseur: | zéolithe ultrastable | zéolithe ultrastable |
| Vitesse superficielle des gaz après le premier diffuseur: | 0,03 m/s | 0,2 m/s |
| Augmentation de la vitesse superficielle due au second diffuseur: | néant | 2,0 m/s |
| Rapport C/O (apparent): | 6,0 | 6,2 |

Les résultats rassemblés ci-après montrent que le dispositif selon l'invention permet, à partir d'une charge lourde (contenant 4,6% en poids de carbone Conradson), d'obtenir une meilleure sélectivité en essence et en distillat léger, ainsi qu'une appréciable réduction de coke, avec, par conséquent, une meilleure stabilité du catalyseur et une diminution en appoint de catalyseur frais:

| | 1er essai | 2ème essai |
|---|---|---|
| Gaz sec % en poids | 5,2 | 4,1 |
| Charge à alkyler, % en vol. | 24,0 | 24,4 |
| Essence, % en vol. | 53,3 | 58,9 |
| Diluant léger % en vol. | 20,4 | 18,7 |
| Diluant lourd % en vol. | 7,4 | 6,8 |
| Coke, % en poids | 7,3 | 6,9 |
| Conversion   220 °C, % en vol. | 72,2 | 74,5 |
|           355 °C, % en vol. | 92,6 | 93,2 |
| Sélectivité en essences, % en vol. | 73,8 | 79,1 |

**Revendications**

1. Procédé d'injection et de conditionnement de grains de catalyseur régénéré à la base d'un réacteur-élévateur de craquage catalytique, au-dessous de la zone d'injection de la charge à craquer, caractérisé en ce que l'on injecte à faible débit dans le réacteur un premier fluide au-dessous du niveau d'introduction des grains de catalyseur en provenance de la régénération, en vue de maintenir un lit fluidisé dense et homogène de catalyseur, dont la partie supérieure sera située au-dessus de ladite zone d'introduction de catalyseur, et en ce que l'on injecte à débit plus élevé un second fluide en dessous de ladite partie supérieure du lit dense de catalyseur, mais substantiellement au-dessus de la zone d'arrivée des grains de catalyseur en provenance de la régénération, en vue de réaliser une phase fluidisée diluée et homogène de grains de catalyseur au-dessus de la zone d'injection dudit second fluide gazeux, mais au-dessous de la zone d'injection de la charge.

2. Procédé d'injection selon la revendication 1, caractérisé en ce que lesdits premier et second fluides sont constitués par des hydrocarbures possédant cinq ou moins de cinq atomes de carbone, ou par des mélanges de tels hydrocarbures.

3. Procédé d'injection selon la revendication 2, caractérisé en ce que lesdits premier et second fluides gazeux contiennent en outre au plus 15% en volume d'hydrogène et/ou au plus 10% en volume de vapeur d'eau.

4. Procédé d'injection selon la revendication 3, caractérisé en ce que ledit second fluide contient des proportions substantielles de vapeur d'eau et a une composition différente dudit premier fluide gazeux.

5. Procédé d'injection selon la revendication 3, caractérisé en ce que ledit second fluide contient des liquides facilement vaporisables de point d'ébullition inférieur à 250 °C.

6. Procédé d'injection selon l'une des revendications 1 à 5, caractérisé en ce que la vitesse dudit premier fluide gazeux à l'injection est comprise entre 0,01 et 0,5 m/s, et en ce que la vitesse dudit second fluide en aval du second diffuseur est supérieure à 0,3 m/s.

7. Procédé d'injection selon l'une des revendications 1 à 6, caractérisé en ce que le lit fluidisé dense de catalyseur constitué à la base de l'élévateur possède une densité comprise entre 400 g/cm³ et 800 g/cm³.

8. Procédé d'injection selon l'une des revendications 1 à 7, caractérisé en ce que l'injection dudit second fluide est effectuée au-dessous de la surface du lit fluidisé dense, mais à une distance au-dessus de la partie supérieure de l'arrivée de zone d'introduction deu catalyseur régénéré, qui est comprise entre 1 et 5 fois le diamètre de l'élévateur au niveau de l'injection.

9. Procédé d'injection selon l'une des revendications 1 à 8, caractérisé en ce que l'injection de la charge à craquer s'effectue dans une zone située au-dessus de la zone d'injection dudit second fluide gazeux à une distance supérieure au diamètre de l'élévateur au niveau de l'injection de la charge à craquer.

10. Dispositif d'injection et de conditionnement des grains de catalyseur régénéré à la base d'un réacteur-élévateur (1) de craquage catalytique, du type dit «riser», disposé verticalement, situé en dessous de la zone d'injection de la charge à craquer et caractérisé en ce qu'il comprend, d'une part, en dessous du niveau d'introduction des grains de catalyseur en provenance de la régénération, un premier diffuseur (5) d'un premier fluide gazeux fonctionnant à faible débit de façon à maintenir un lit fluidisé dense et homogène de catalyseur, dont la partie supérieure sera située au-dessus de ladite zone d'introduction du catalyseur, et, d'autre part, en dessous de la partie supérieure du lit fluidisé dense de catalyseur ainsi constitué, mais substantiellement au-dessus de la zone d'arrivé des grains de catalyseur en provenance de la régénération, un second diffuseur (8) d'un second fluide fonctionnant à débit plus élevé et destiné à la réalisation d'une phase fluidisée diluée et homogène de grains de catalyseur au-dessus dudit second diffuseur, mais en dessous de la zone d'injection de la charge.

11. Dispositif d'injection selon la revendication 10, caractérisé en ce que ledit second diffuseur (8) est disposé annulairement dans l'élévateur.

12. Dispositif d'injection selon l'une des revendications 10 à 11, caractérisé en ce que ledit second diffuseur (8) est situé au-dessus de la zone d'introduction du catalyseur régénéré à une distance qui est comprise entre 1 et 5 fois le diamètre de l'élévateur (1) au niveau de l'injection.

13. Dispositif d'injection selon l'une des revendications 10 à 12, caractérisé en ce qu'il comprend au moins un injecteur (6) de la charge à craquer disposé au-dessus dudit second diffuseur (8) à une distance de celui-ci supérieure au diamètre de l'élévateur au niveau dudit injecteur.

14. Dispositif d'injection selon la revendication 13, caractérisé en ce qu'il comprend plusieurs injecteurs (6) de la charge à craquer disposés symétriquement à l'intérieur de l'élévateur.

15. Utilisation d'un procédé selon l'une des revendications 1 à 9, pour le craquage catalytique de charges lourdes d'hydrocarbures pétroliers.

16. Utilisation selon la revendication 15, caractérisée en ce que la zone fluidisée dense de catalyseur, située à la base de la zone réactionnelle, sert à l'introduction des additifs de procédés.

17. Utilisation selon la revendication 15, caractérisée par l'injection par le second diffuseur (8) d'un fluide contenant des essences en vue de la production d'oléfines légères.

**Claims**

1. A process for the injection and processing of regenerated catalyst particles at the bottom of a catalytic cracking reactor-riser below the injection zone of the charge to be cracked, characteried in that a first fluid is injected at a low rate of flow into the reactor below the level at which the catalyst particles resulting from regeneration are introduced, for the purpose of maintaining a dense and homogeneous fluidised bed of catalyst, the upper portion of which will be disposed above said zone in which the catalyst is introduced, and in that a second fluid is injected at a higher rate of flow below said upper portion of the dense bed of the catalyst but substantially above the inlet zone of the catalyst particles resulting from regeneration, for the purpose of forming a diluted and homogeneous fluidised phase of catalyst particles above the injection zone of said second gaseous fluid but below the injection zone of the charge.

2. An injection process according to claim 1, characterised in that said first and second fluids are composed of hydrocarbons having five or less than five carbon atoms, or of mixtures of these hydrocarbons.

3. An injection process according to claim 2, characterised in that said first and second gaseous fluids additionally contain at most 15% by volume of hydrogen and/or at most 10% by volume of water vapour.

4. An injection process according to claim 3, characterised in that said second fluid contains substantial proportions of water vapour and is of a different composition to said first gaseous fluid.

5. An injection process according to claim 3, characterised in that said second fluid contains liquids which are readily vaporisable and which have a boiling point of below 250 °C.

6. An injection process according to any of claims 1 to 5, characterised in that the velocity of said first gaseous fluid upon injection is between 0.01 and 0.5 m/s, and in that the velocity of said second fluid downstream of the second diffuser is higher than 0.3 m/s.

7. An injection process according to any of claims 1 to 6, characterised in that the dense fluidised bed of catalyst formed at the bottom of the riser has a density of between 400 g/cm³ and 800 g/cm³.

8. An injection process according to any of claims 1 to 7, characterised in that the injection of said second fluid is effected below the surface of the dense fluidised bed but at a distance above the upper portion of the inlet of the zone in which the regenerated catalyst is introduced, which is is between 1 and 5 times the diameter of the riser at the injection level.

9. An injection process according to any of claims 1 to 8, characterised in that the injection of the charge to be cracked is carried out in a zone situated above the injection zone of said second gaseous fluid at a distance which is greater than the diameter of the riser at the injection level of the charge to be cracked.

10. An apparatus for the injection and processing of regenerated catalyst particles at the bottom of a catalytic cracking reactor-riser (1), of the so-called riser type, arranged vertically and situated below the injection zone of the charge to be cracked, and characterised in that it firstly comprises, below the level at which the catalyst particles resulting from regeneration are introduced, a first diffuser (5) for a first gaseous fluid operating at a low rate of flow so as to maintain a dense and homogeneous fluidised bed of catalyst, the upper portion of which will be disposed above said zone in which the catalyst is introduced, and secondly, below the upper portion of the dense fluidised bed of catalyst thus formed but substantially above the inlet zone of the catalyst particles resulting from regeneration, a second diffuser (8) for a second fluid operating at a higher rate of flow and intended to form a diluted and homogeneous fluidised phase of catalyst particles above said second diffuser but below the injection zone of the charge.

11. An injection apparatus according to claim 10, characterised in that said second diffuser (8) is disposed annularly in the riser.

12. An injection apparatus according to any of claims 10 and 11, characterised in that said second diffuser (8) is disposed above the zone in which the regenerated catalyst is introduced, at a distance which is between 1 and 5 times the diameter of the riser (1) at the injection level.

13. An injection apparatus according to any of claims 10 to 12, characterised in that it comprises at least one injector (6) for the charge to be cracked, disposed above said second diffuser (8) at a distance therefrom which is greater that the diameter of the riser at the level of said injector.

14. An injection apparatus according to claim 13, characterised in that it comprises a plurality of injectors (6) for the charge to be cracked, which are arranged symmetrically inside the riser.

15. Application of the process according to any of claims 1 to 9 to the catalytic cracking of heavy charges of petroleum hydrocarbons.

16. Application according to claim 15, characterised in that the dense fluidised zone of catalyst, situated at the bottom of reactive zone, serves for the introduction of process additives.

17. Application according to claim 15, characterised by the injection through the second diffuser (8) of a fluid containing petroleum hydrocarbons for the purpose of producing light olefins.

**Patentansprüche**

1. Verfahren zum Einblasen und Konditionieren von Körnern regenerierten Katalysators am Fuss eines Reaktorelevators zum katalytischen Cracken unterhalb der Zone, wo die zu crackende Charge eingeblasen wird, dadurch gekennzeichnet, dass ein erstes Strömungsmittel mit geringem Durchsatz in den Reaktor unterhalb des Zufuhrniveaus der von der Regenerierung kommenden Katalysatorkörner eingeblasen wird, um eine dichte und homogene Katalysatorwirbelschicht aufrechtzuerhalten, deren oberer Teil oberhalb der Katalysatorzufuhrzone liegt, und dass ein zweites Strömungsmittel mit grösserem Durchsatz auf der unteren Seite des oberen Teils der dichten Katalysatorwirbelschicht, jedoch im wesentlichen oberhalb der Einströmzone der von der Regenierung kommenden Katalysatorkörner eingeblasen wird, um eine verdünnte und homogene fluidisierte Phase von Katalysatorkörnern oberhalb der Einblaszone des zweiten gasförmigen Strömungsmittels, jedoch unterhalb der Einblaszone der Charge zustandezubringen.

2. Verfahren zum Einblasen nach Anspruch 1, dadurch gekennzeichnet, dass das erste Strömungsmittel und das zweite Strömungsmittel aus Kohlenwasserstoffen mit fünf oder weniger als fünf Kohlenstoffatomen oder aus Gemischen solcher Kohlenwasserstoff bestehen.

3. Verfahren zum Einblasen nach Anspruch 2, dadurch gekennzeichnet, dass das erste gasförmige Strömungsmittel und das zweite gasförmige Strömungsmittel ausserdem höchstens 15 Vol.-% Wasserstoff und/oder höchstens 10 Vol.-% Wasserdampf enthalten.

4. Verfahren zum Einblasen nach Anspruch 3, dadurch gekennzeichnet, dass das zweite Strömungsmittel wesentliche Gehalte an Wasserdampf und eine andere Zusammensetzung als das erste gasförmige Strömungsmittel aufweist.

5. Verfahren zum Einblasen nach Anspruch 3, dadurch gekennzeichnet, dass das zweite Strömungsmittel leicht verdampfbare Flüssigkeiten mit einem Siedepunkt unter 250 °C enthält.

6. Verfahren zum Einblasen nach einem der Ansprüche 1 bis 5, dadurch gekennzeichnet, dass die Geschwindigkeit des ersten gasförmigen Strömungsmittels beim Einblasen zwischen 0,01 und 0,5 m/s liegt und die Geschwindigkeit des zweiten Strömungsmittels stromabwärts vom zweiten Diffusor grösser als 0,3 m/s ist.

7. Verfahren zum Einblasen nach einem der Ansprüche 1 bis 6, dadurch gekennzeichnet, dass die am Fluss des Elevators hervorgebrachte dichte Katalysatorwirbelschicht eine Dichte zwischen 400 g/cm$^3$ und 800 g/cm$^3$ aufweist.

8. Verfahren zum Einblasen nach einem der Ansprüche 1 bis 7, dadurch gekennzeichnet, dass das zweite Strömungsmittel unterhalb der Oberfläche der dichten Wirbelschicht, jedoch oberhalb des oberen Teils des Einlasses der Zufuhrzone für den regenerierten Katalysator in einem Abstand eingeblasen wird, welcher zwischen dem Einfachen und dem Fünffachen des Durchmessers des Elevators auf dem Einblasniveau liegt.

9. Verfahren zum Einblasen nach einem der Ansprüche 1 bis 8, dadurch gekennzeichnet, dass die zu crackende Charge in einer Zone eingeblasen wird, welche oberhalb der Einblaszone des zweiten gasförmigen Strömungsmittels in einem Abstand grösser als der Durchmesser des Elevators auf dem Einblasniveau der zu crackenden Charge liegt.

10. Vorrichtung zum Einblasen und Konditionieren von Körnern regenerierten Katalysators am Fuss eines vertikal angeordneten Reaktorelevators (1) zum katalytischen Cracken vom sogenannten «Riser»-Typ, welche auf der unteren Seite der Zone vorgesehen ist, wo die zu crackende Charge eingeblasen wird, dadurch gekennzeichnet, dass einerseits auf der unteren Seite des Zufuhrniveaus der von der Regenerierung kommenden Katalysatorkörner ein erster Diffusor (5) für ein erstes gasförmiges Strömungsmittel, welcher mit geringem Durchsatz arbeitet, um eine dichte und homogene Katalysatorwirbelschicht aufrechtzuerhalten, deren oberer Teil oberhalb der Katalysatorzufuhrzone liegt, und andererseits auf der unteren Seite des oberen Teils der so gebildeten dichten Katalysatorwirbelschicht, jedoch im wesentlichen oberhalb der Einströmzone der von der Regenerierung kommenden Katalysatorkörner, ein zweiter Diffusor (8) für ein zweites Strömungsmittel vorgesehen ist, welcher mit grösserem Durchsatz arbeitet und dazu bestimmt ist, eine verdünnte und homogene fluidisierte Phase von Katalysatorkörnern oberhalb des zweiten Diffusors, jedoch auf der unteren Seite der Einblaszone der Charge zustandezubringen.

11. Vorrichtung zum Einblasen nach Anspruch 10, dadurch gekennzeichnet, das der zweite Diffusor (8) ringförmig im Elevator angeordnet ist.

12. Vorrichtung zum Einblasen nach Anspruch 10 oder 11, dadurch gekennzeichnet, dass der zweite Diffusor (8) oberhalb der Zufuhrzone für den regenerierten Katalysator in einem Abstand vorgesehen ist, welcher zwischen dem Einfachen und dem Fünffachen des Durchmessers des Elevators (1) auf dem Einblasniveau liegt.

13. Vorrichtung zum Einblasen nach einem der Ansprüche 10 bis 12, dadurch gekennzeichnet, dass wenigstens ein Injektor (6) für die zu crackende Charge vorgesehen ist, welcher oberhalb des zweiten Diffusors (8) in einem Abstand von demselben angeordnet ist, der grösser als der Durchmesser des Elevators auf dem Niveau des Injektors ist.

14. Vorrichtung zum Einblasen nach Anspruch 13, dadurch gekennzeichnet, dass mehrere Injektoren (6) für die zu crackende Charge vorgesehen sind, welche symmetrisch zum Inneren des Elevators angeordnet sind.

15. Anwendung des Verfahrens nach einem der Ansprüche 1 bis 9 zum katalytischen Cracken von schweren Chargen von Erdölkohlenwasserstoffen.

16. Anwendung nach Anspruch 15, dadurch gekennzeichnet, dass die dichte Katalysatorwirbelzone am Fuss der Reaktionszone zur Zufuhr von Verfahrensadditiven dient.

17. Anwendung nach Anspruch 15, dadurch gekennzeichnet, dass mittels des zweiten Diffusors (8) ein Strömungsmittel eingeblasen wird, welches Benzine enthält, um leichte Olefine herzustellen.

FIG.1A

FIG.1B

FIG.2

FIG. 3